# FASCICULE DE BREVET EUROPEEN

(11) **EP 2 824 809 B1**
(45) Date de publication et mention de la délivrance du brevet: **08.04.2020**
(21) Numéro de dépôt: 14175552.0
(22) Date de dépôt: 03.07.2014
(51) Int. Cl.: H02K 11/30, H02K 11/33, H02K 3/50

(54) **Actionneur électromécanique**
Elektromechanisches Stellglied
Electromechanical actuator

(30) Priorité: 12.07.2013 FR 1356900
(43) Date de publication de la demande: 14.01.2015
(73) Titulaire: Safran Landing Systems, 78140 Vélizy-Villacoublay (FR)
(72) Inventeur: Nierlich, Florent, 78140 VELIZY-VILLACOUBLAY (FR); Annee, Etienne, 78140 VELIZY-VILLACOUBLAY (FR); Pierra, Raphaël, 78140 VELIZY-VILLACOUBLAY (FR)
(74) Mandataire: Lavialle, Bruno François Stéphane

(56) Documents cités:
- EP-A1- 0 092 067
- EP-A1- 2 161 819
- EP-A1- 2 704 297
- DE-A1-102005 032 965
- DE-A1-102009 002 420
- DE-A1-102009 002 422
- DE-U1- 7 919 276
- GB-A- 2 462 940
- GB-A- 2 494 797
- JP-A- 2007 028 845
- US-A1- 2007 024 133
- US-A1- 2012 269 666

## Description

L'invention concerne un actionneur électromécanique comportant un moteur électrique comprenant une partie statorique portant un module électrique alimentant le moteur.

### ARRIERE PLAN DE L'INVENTION

On trouve de nombreux actionneurs électromécaniques dans les aéronefs modernes, utilisés dans des applications variées : commandes de vol, freinage, etc.

Les actionneurs électromécaniques comportent un organe d'actionnement et un moteur électrique adapté à entraîner l'organe d'actionnement.

Le moteur électrique de l'actionneur est intégré dans un système électrique de l'aéronef qui, outre le moteur en question, comporte généralement une unité de puissance qui génère un signal d'alimentation du moteur et une unité de commande qui reçoit une consigne et pilote l'unité de puissance en fonction de cette consigne. Lorsque le moteur est un moteur à courant alternatif, l'unité de puissance comprend un onduleur qui transforme une tension continue en une tension alternative pour générer le signal d'alimentation du moteur.

Le respect des normes de compatibilité électromagnétique est une contrainte importante lors de la conception de tels systèmes électriques. En effet, de fortes variations de courant et de tension sont créées par des interrupteurs de l'onduleur et sont transmises aux moteurs en générant d'importantes perturbations électromagnétiques conduites et rayonnées.

Le document EP 2 161 819 A1 divulgue une machine électrique dont les composantes électroniques sont situées à proximité des têtes des bobines statoriques.

Le document DE 10 2005 032 965 A1 divulgue une machine électrique dont les composantes électroniques sont situées aux extrémités axiales des conducteurs statoriques.

### OBJET DE L'INVENTION

L'invention a pour objet de réduire les perturbations électromagnétiques évoquées plus tôt.

### RESUME DE L'INVENTION

En vue de la réalisation de ce but, on propose un actionneur électromécanique tel que celui de la revendication 1.

Ainsi, le courant électrique d'alimentation est généré par le module électrique situé à proximité immédiate de l'ensemble de bobinage. Le fonctionnement de l'actionneur ne nécessite donc plus de transporter une tension alternative dans l'aéronef entre une unité de puissance externe et l'actionneur. Comme une grande partie des perturbations électromagnétiques proviennent d'un câble transportant cette tension alternative, on réduit considérablement ces perturbations électromagnétiques. Le moteur électrique est bien relié par un câble à une unité de puissance externe, mais ce câble transporte une tension continue et est donc à l'origine de perturbations électromagnétiques nettement réduites.

### BREVE DESCRIPTION DES DESSINS

L'invention sera mieux comprise à la lumière de la description qui suit en référence aux figures des dessins annexés parmi lesquelles :
- la figure 1 représente un actionneur électromécanique de l'invention selon un premier mode de réalisation ;
- la figure 2 représente une vue en coupe selon un plan P, visible sur la figure 1, d'un module électrique de l'actionneur de l'invention selon le premier mode de réalisation ;
- la figure 3 représente un actionneur électromécanique de l'invention selon un deuxième mode de réalisation ;
- la figure 4 représente une vue en coupe selon un plan P', visible sur la figure 3, d'un module électrique de l'actionneur de l'invention selon le deuxième mode de réalisation.

### DESCRIPTION DETAILLEE DE L'INVENTION

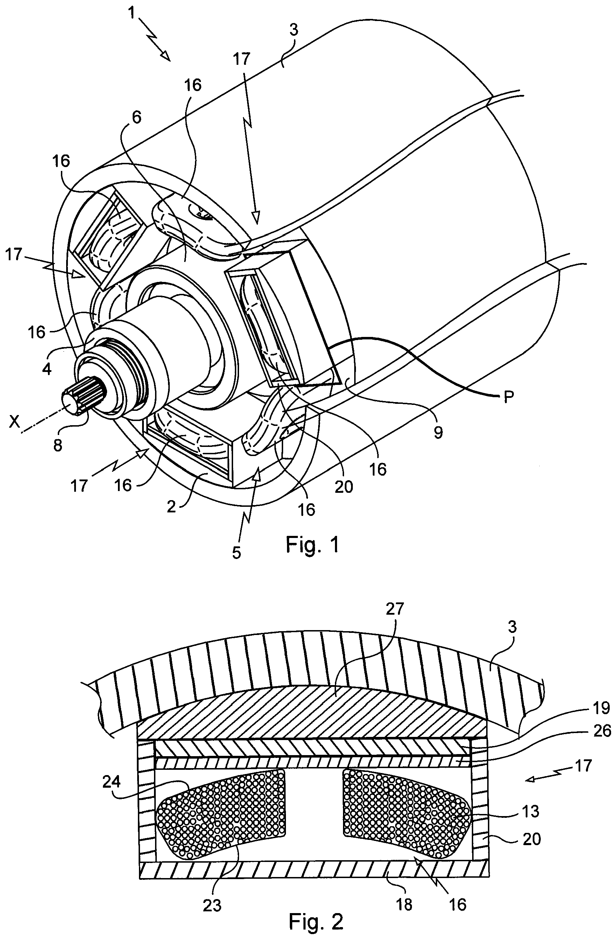

En référence aux figures 1 et 2, un actionneur électromécanique 1 de l'invention selon un premier mode de réalisation comporte un organe d'actionnement non représenté sur les figures et un moteur électrique 2 adapté à entraîner l'organe d'actionnement.

Pour illustrer l'invention, on met ici en œuvre l'actionneur électromécanique 1 de l'invention selon le premier mode de réalisation dans une application de freinage électrique d'aéronef. L'organe d'actionnement de l'actionneur 1 est un donc un poussoir muni d'un patin destiné à exercer un effort de freinage sur des organes de friction d'un frein d'une roue d'un atterrisseur de l'aéronef, par exemple sur une pile de disques de carbone du frein. L'actionneur 1 est porté par un porte-actionneurs dudit frein.

Le moteur électrique 2 de l'actionneur 1 est ici un moteur électrique synchrone triphasé à aimants permanents comportant un carter 3, une partie rotorique 4 et une partie statorique 5.

La partie rotorique 4 comporte dix aimants 6 ainsi qu'un arbre du moteur 2 d'axe X comportant une extrémité cannelée 8 permettant de transmettre un mouvement rotatif de l'arbre du moteur 2, via un réducteur, à une liaison vis/écrou qui transforme de manière connue ce mouvement rotatif en un coulissement du poussoir de l'actionneur 1.

La partie statorique 5 comporte quant à elle un corps 9 formant carcasse, ladite carcasse étant constituée d'un empilage de tôles magnétiques disposées sensiblement parallèlement à un plan perpendiculaire à l'axe X. La carcasse comporte une pluralité de dents délimitant des encoches orientées longitudinalement. Des fils conducteurs électriques 13 sont disposés dans ces encoches pour constituer un ensemble de bobinage comprenant un certain nombre de bobines 15 reçues dans lesdites encoches et saillant de la carcasse en formant des chignons 16. Ici, comme cela est visible sur la figure 1, le corps 9 de la partie statorique 5 comporte douze encoches recevant six bobines 15 formant six chignons 16.

Le moteur 2 est alimenté et commandé par un courant électrique d'alimentation Ia circulant dans l'ensemble de bobinage, et formé en l'occurrence ici par trois courants de phase Ip qui chacun circulent dans une phase du moteur électrique 2. Le courant électrique d'alimentation Ia est généré à partir d'une tension continue d'entrée Vce du moteur et d'un signal de commande d'entrée Sce du moteur, la tension continue d'entrée Vce et le signal de commande d'entrée Sce étant générés respectivement par une unité de puissance externe et par une unité de commande externe situées à l'intérieur de l'aéronef, et transportés par un câble blindé cheminant dans l'aéronef et le long de l'atterrisseur jusqu'au porte actionneur portant l'actionneur de l'invention. Le câble d'alimentation est connecté au moteur 2 via un connecteur électrique positionné de manière classique sur l'actionneur 1.

Trois modules électriques 17, représentés schématiquement sur les figures, reçoivent la tension continue d'entrée Vce et le signal de commande d'entrée Sce et génèrent chacun un courant de phase Ip. Chaque module électrique 17 est positionné au moins partiellement contre un chignon 16. Chaque module électrique 17 comporte une unité de commande 18, une unité de puissance 19, des moyens de fixation 20 et des moyens de connexion.

L'unité de commande 18 de chaque module électrique 17 s'étend contre une première face 23 du chignon 16 en regard de la partie statorique 5.

L'unité de puissance 19 s'étend quant à elle en regard d'une seconde face 24 du chignon 16 en regard du carter 3 du moteur 2.

L'unité de commande 18 et l'unité de puissance 19 sont fixées entre elles et maintenues contre le chignon 16 par les moyens de fixation 20 qui s'étendent le long de régions latérales du chignon 16 et qui comportent classiquement des composants de fixation bien connus et non représentés en détail, parmi lesquels on trouve par exemple des entretoises, des colonnettes, des rivets, des glissières, de la colle, etc. L'unité de commande 18 et l'unité de puissance 19 sont connectées électriquement par les moyens de connexion, qui sont eux aussi formés par des composants de connexion classiques, parmi lesquels on trouve par exemple des fils, des connecteurs, etc. Les moyens de connexion, non représentés sur la figure 1, s'étendent le long des moyens de fixation. Chaque module électrique 17 entoure ainsi au moins partiellement un chignon 16.

Un élément isolant thermique 26, ou plaque isolante, s'étend entre l'unité de puissance 19 et le chignon 16. Cette plaque isolante 26 permet d'évite que le courant de phase Ip circulant dans la bobine 15 n'augmente de manière trop importante la température du module électrique 17.

Un élément thermiquement conducteur 27 s'étend entre l'unité de puissance et le carter du moteur. Cet élément thermiquement conducteur 27 permet de dissiper dans le carter 3 la chaleur générée par le fonctionnement du module électrique 17.

Une résine de surmoulage vient ensuite recouvrir chaque chignon 16 équipé d'un module électrique 17, ainsi que l'unité de commande 18, l'unité de puissance 19, les moyens de fixation 20, les moyens de connexion, la plaque isolante 26 et l'élément thermiquement conducteur 27. On forme ainsi un ensemble compact et solide autour du chignon 16.

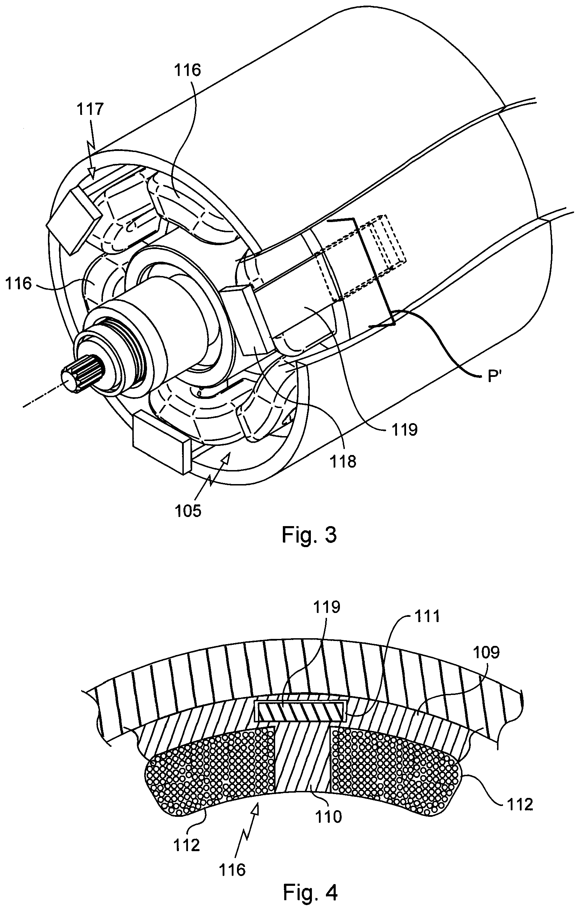

Dans un second mode de réalisation, visible sur les figures 3 et 4, et pour lequel chaque élément correspondant à un élément de la figure 1 est référencé par la même référence à laquelle on ajouté une centaine, chaque module électrique 117 est positionné au moins partiellement au-dessus d'un chignon 116, et au moins partiellement à l'intérieur d'un logement 111 du corps 109 de la partie statorique 105, ledit logement 111 étant ici situé entre deux encoches 112 du corps 109 de la partie statorique 105, plus précisément entre une dent 110 définie par les deux encoches 112 et le carter 103 du moteur. Le logement 111 s'étend longitudinalement dans le corps 109 le long de la bobine 115 dont une partie saillante forme le chignon 116. L'unité de commande 118 est située au dessus du chignon 116. L'unité de puissance 119 est située dans le logement 111. Cette position de l'unité de commande et de l'unité de puissance ne fait pas partie de l'invention. Des moyens de fixation et des moyens de connexion relient à nouveau mécaniquement et électriquement l'unité de commande 118 et l'unité de puissance 119.

On décrit maintenant les caractéristiques des éléments électriques du moteur 2 de l'actionneur 1 de l'invention. Dans chaque mode de réalisation décrit plus tôt, chaque unité de puissance 19, 119 des modules électriques 17, 117 comporte des transistors de puissance, des moyens de pilotage des transistors et des moyens de filtrage. Chaque unité de commande 18, 118 comporte quant à elle des moyens de contrôle de l'unité de puissance 19, 119.

Les transistors de puissance de l'unité de puissance 19, 119 sont connectés à la tension continue d'entrée Vce via les moyens de filtrage qui filtrent la tension continue d'entrée de manière à supprimer les perturbations que celle-ci connaît à cause notamment de son transport dans le câble reliant l'actionneur à l'unité externe de puissance. Les transistors sont pilotés par les moyens de pilotage, eux même commandés par un signal de commande interne générée par l'unité de commande 18, 118 à partir du signal de commande d'entrée Sce. Les transistors de l'unité de puissance 19, 119 forment ainsi un onduleur alimenté par la tension continue d'entrée Vce filtrée et piloté par le signal interne de commande. L'onduleur génère ainsi les courants de phase Ip du courant électrique d'alimentation la. Les transistors de puissance sont connectés électriquement aux bobines pour leur fournir les courants de phase Ip.

Les transistors de puissance peuvent notamment être connectés selon une topologie en bras d'onduleur ou en pont en H. On obtient ainsi un moteur électrique triphasé dans lequel certaines extrémités des bobines 15 sont connectées de manière à créer un neutre dans le bobinage. On peut aussi obtenir un moteur triphasé double étoile dans lequel certaines extrémités des bobines 15 sont connectées de manière à créer deux neutres dans le bobinage. On pourrait enfin obtenir un moteur électrique à six phases indépendantes, dans lequel aucun neutre n'est requis.

Avantageusement, l'unité de commande d'un module électrique comporte un composant électrique de technologie hybride, qui lui-même regroupe un certain nombre de puces intégrées directement au sein d'un même boîtier. Un tel composant hybride présente une tenue améliorée en température, et permet de compacter l'unité de commande du module électrique.

Avantageusement, on prévoit de munir le corps 9, 109 de la partie statorique 5, 105 de cavités contenant un matériau dit « matériau à changement de phase ». Un tel matériau, qui peut être liquide, solide, gazeux, ou hétérogène, change de phase à une température prédéterminée. En changeant de phase, le matériau à changement de phase emmagasine une quantité d'énergie thermique relativement importante, qu'il libère ultérieurement en retournant à sa phase initiale. On choisit de préférence un matériau changeant de phase à une température inférieure à une température maximale des modules électriques 17, 117, ladite température maximale étant par exemple la température au-delà de laquelle le fonctionnement des modules 17, 117 est perturbé par la température, ou bien au-delà de laquelle certains composants des modules 17, 117 courent un risque de dégradation. Ainsi, lorsque la température du moteur 2 augmente, le matériau à changement de phase chauffe et absorbe de la chaleur, ce qui a pour effet de limiter la montée de température. Au contraire, lorsque la température diminue, le matériau restitue cette chaleur : on homogénéise ainsi la température au niveau du moteur 2.

Les matériaux à changement de phase sont particulièrement intéressants dans une application de freinage d'aéronef. Il arrive en effet, au cours de freinages d'urgence, que la température du moteur augmente de façon très importante. Ces augmentations de température sont brèves et peu fréquentes, et l'utilisation de matériaux à changement de phase est parfaitement adaptée pour homogénéiser la température dans de telles situations.

L'invention n'est pas limitée aux modes de réalisation particuliers qui viennent d'être décrits, mais, bien au contraire, couvre toute variante entrant dans le cadre de l'invention tel que défini par les revendications.

Bien que l'on ait illustré l'invention dans une application de système de freinage électrique, un actionneur de l'invention peut être utilisé dans de nombreuses applications diverses (commandes de vol, etc.).

Bien que le moteur de l'invention soit un moteur synchrone triphasé avec six bobines, l'invention peut bien sûr être mise en œuvre sur des moteurs différents.

Il est aussi possible de prévoir un nombre différent de modules électriques, par exemple un seul module, de prévoir que chaque module comporte une seule carte électrique sur laquelle sont implémentées à la fois l'unité de commande et l'unité de puissance, etc.

## Revendications

1. Actionneur électromécanique comportant un organe d'actionnement et un moteur électrique (2) adapté à entraîner l'organe d'actionnement, le moteur électrique (2) comprenant :
- une partie rotorique (4) ;
- une partie statorique (5, 105) comprenant un corps (9, 109) formant carcasse et un ensemble de bobinage reçu dans des encoches (112) du corps (9, 109), l'ensemble de bobinage formant un chignon (116) ayant une première face et une deuxième face opposée à la première face ;
au moins un module électrique (17, 117) adapté à générer un courant électrique d'alimentation (Ia) du moteur électrique (2) circulant dans l'ensemble de bobinage ;
le module électrique (17, 117) étant porté par le corps (9, 109), et comportant une unité de commande (18, 118) et une unité de puissance (19, 119) ;
**caractérisé en ce que** le module électrique est positionné au moins partiellement contre la première face ou la deuxième face du chignon (116),
et **en ce que** le module électrique (17, 117) entoure au moins partiellement le chignon (116), l'unité de commande s'étendant contre la première face du chignon en regard de la partie statorique (5), et l'unité de puissance s'étendant contre la seconde face du chignon en regard du carter (3) du moteur (2), l'unité de commande et l'unité de puissance étant fixées entre elles et maintenues contre le chignon par des moyens de fixation.

2. Actionneur électromécanique selon la revendication 1, dans lequel le module électrique (117) est positionné au moins partiellement au dessus d'une partie de l'ensemble de bobinage formant un chignon (116) .

3. Actionneur électromécanique selon la revendication 1, dans lequel le module électrique (117) est positionné au moins partiellement à l'intérieur d'un logement (111) du corps (109).

4. Actionneur électromécanique selon la revendication 3, dans lequel ledit logement (111) est situé entre deux encoches (112) du corps statorique.

5. Actionneur électromécanique selon la revendication 1, dans lequel l'unité de puissance (19, 119) comporte un transistor de puissance et dans lequel l'unité de commande (18, 118) comporte un composant électrique de technologie hybride.

6. Actionneur électromécanique selon l'une des revendications précédentes, dans lequel un élément thermiquement conducteur (27) est situé entre le module électrique et un carter (3) du moteur.

7. Actionneur électromécanique selon l'une des revendications précédentes, dans lequel un élément isolant thermique (26) s'étend entre le module électrique et l'ensemble de bobinage.

8. Actionneur électromécanique selon l'une des revendications précédentes, dans lequel le module électrique est recouvert par une résine de surmoulage après avoir été installé sur le corps.

9. Actionneur électromécanique selon l'une des revendications précédentes, dans lequel le corps de la partie statorique comporte au moins une cavité contenant un matériau à changement de phase.

10. Actionneur électromécanique selon la revendication 9, dans lequel un changement de phase du matériau à changement de phase survient à une température inférieure à une température maximale du module électrique.

## Patentansprüche

1. Elektromechanischer Aktor, umfassend ein Betätigungselement und einen Elektromotor (2), der geeignet ist, das Betätigungselement anzutreiben, wobei der Elektromotor (2) umfasst:
- einen Rotorteil (4);
- einen Statorteil (5, 105), der einen Körper (9, 109) umfasst, der ein Gehäuse bildet, und einen Spulensatz, der in Schlitzen (112) des Körpers (9, 109) aufgenommen ist, wobei der Spulensatz ein Schaltende (116) bildet, das eine erste Fläche und eine der ersten Fläche entgegengesetzte zweite Fläche hat;
mindestens ein Elektromodul (17, 117), das geeignet ist, einen Versorgungsstrom (Ia) zur Versorgung des Elektromotors (2) zu erzeugen, der in dem Spulensatz fließt;
wobei das Elektromodul (17, 117) von dem Körper (9, 109) getragen wird und eine Steuereinheit (18, 118) und eine Leistungseinheit (19, 119) umfasst;
**dadurch gekennzeichnet, dass** das Elektromodul zumindest teilweise an der ersten Fläche oder der zweiten Fläche des Schaltendes (116) positioniert ist,
und dass das Elektromodul (17, 117) das Schaltende (116) zumindest teilweise umgibt, wobei sich die Steuereinheit an der ersten Fläche des Schaltendes gegenüber dem Statorteil (5) erstreckt und sich die Leistungseinheit an der zweiten Fläche des Schaltendes gegenüber dem Gehäuse (3) des Motors (2) erstreckt, wobei die Steuereinheit und die Leistungseinheit aneinander befestigt sind und über Befestigungsmittel an dem Schaltende gehalten werden.

2. Elektromechanischer Aktor nach Anspruch 1, bei dem das Elektromodul (117) zumindest teilweise über einem Teil des Spulensatzes positioniert ist, der ein Schaltende (116) bildet.

3. Elektromechanischer Aktor nach Anspruch 1, bei dem das Elektromodul (117) zumindest teilweise im Inneren einer Aufnahme (111) des Körpers (109) positioniert ist.

4. Elektromechanischer Aktor nach Anspruch 3, bei dem sich die Aufnahme (111) zwischen zwei Schlitzen (112) des Statorkörpers befindet.

5. Elektromechanischer Aktor nach Anspruch 1, bei dem die Leistungseinheit (19, 119) einen Leistungstransistor umfasst und bei dem die Steuereinheit (18, 118) ein elektrisches Bauelement der Hybridtechnik umfasst.

6. Elektromechanischer Aktor nach einem der vorhergehenden Ansprüche, bei dem sich ein wärmeleitendes Element (27) zwischen dem Elektromodul und einem Gehäuse (3) des Motors befindet.

7. Elektromechanischer Aktor nach einem der vorhergehenden Ansprüche, bei dem sich ein wärmeisolierendes Element (26) zwischen dem Elektromodul und dem Spulensatz erstreckt.

8. Elektromechanischer Aktor nach einem der vorhergehenden Ansprüche, bei dem das Elektromodul von einem Umformungsharz bedeckt wird, nachdem es an dem Körper installiert wurde.

9. Elektromechanischer Aktor nach einem der vorhergehenden Ansprüche, bei dem der Körper des Statorteils mindestens einen Hohlraum umfasst, der ein Phasenwechselmaterial enthält.

10. Elektromechanischer Aktor nach Anspruch 9, bei dem ein Phasenwechsel des Phasenwechselmaterials bei einer Temperatur eintritt, die niedriger als eine maximale Temperatur des Elektromoduls ist.

## Claims

1. An electromechanical actuator comprising an actuator member and an electric motor (2) adapted to drive the actuator member, the electric motor (2) comprising:
. a rotor portion (4);
. a stator portion (5, 105) comprising a yoke-forming body (9, 109) and a set of coils received in slots (112) in the body (9, 109), the set of coils forming a winding overhang (116) having a first face and an opposed second face;
. at least one electrical module (17, 117) adapted to generate an electrical power supply current (Ia) for the electric motor (2), which current flows in the set of coils;
the electrical module (17, 117) being carried by the body (9, 109) and comprising a control unit (18, 118) and a power unit (19, 119);
**characterized in that** the electrical module is positioned at least partially against the first face or the second face of the overhang (116),
and **in that** the electrical module (17, 117) surrounds the winding overhang at least in part, the control unit extending against the first face of the overhang facing the stator portion (5), and the power unit extending against the second face of the overhang facing the casing (3) of the motor, the control unit and the power unit being fastened together and held against the overhang by fastener means.

2. An electromechanical actuator according to claim 1, wherein the electrical module (117) is positioned at least in part over a portion of the set of coils forming a winding overhang (116).

3. An electromechanical actuator according to claim 1, wherein the electrical module (117) is positioned at least in part inside a housing (111) in the body (109).

4. An electromechanical actuator according to claim 3, wherein said housing (111) is situated between two slots (112) of the stator body.

5. An electromechanical actuator according to claim 1, wherein the power unit (19, 119) includes a power transistor, and wherein the control unit (18, 118) includes a hybrid technology electrical component.

6. An electromechanical actuator according to any preceding claim, wherein a thermally conductive element (27) is situated between the electrical module and a casing (3) of the motor.

7. An electromechanical actuator according to any preceding claim, wherein a thermal lagging element (26) extends between the electrical module and the set of coils.

8. An electromechanical actuator according to any preceding claim, wherein the electrical module is covered in a potting resin after being installed on the body.

9. An electromechanical actuator according to any preceding claim, wherein the body of the stator portion includes at least one cavity containing a phase-change material.

10. An electromechanical actuator according to claim 9, wherein the phase-change material changes phase at a temperature lower than a maximum temperature of the electrical module.
